# EUROPEAN PATENT APPLICATION

(11) **EP 4 711 902 A1**
(43) Date of publication of application: **18.03.2026**
(21) Application number: 25200167.2
(22) Date of filing: 04.09.2025
(51) Int. Cl.: G06F 3/042

(54) **TOUCH DETECTION SYSTEM**

(30) Priority: 13.09.2024 JP 2024159204
(71) Applicant: Alps Alpine Co., Ltd., Ota-ku, Tokyo 145-8501 (JP)
(72) Inventor: Ichikawa, Teiichi, Iwaki-city Fukushima (JP)
(74) Representative: Schmitt-Nilson Schraud Waibel Wohlfrom Patentanwälte Partnerschaft mbB

(57) **Abstract**

A touch detection system includes a display, touch sensors arranged below a lower edge of a display surface of the display, light sources, photodetectors to detect a reflected light of the non-visible light emitted by the light source, a touch detector to detect a touch on the touch sensors with a set detection sensitivity, and a proximity detector to detect proximity of a hand to a region below the lower edge of the display surface, wherein the proximity detector detects the proximity of the hand to the region when a predetermined condition is satisfied, and when the proximity of the hand to the region is detected, the touch detector sets the detection sensitivity of the touch detector to a first sensitivity, and otherwise, the touch detector sets the detection sensitivity of the touch detector to a second sensitivity, which is less sensitive than the first sensitivity.

## Description

The present application is based on and claims priority to Japanese patent application No. 2024-159204 filed on September 13, 2024, with the Japan Patent Office, the entire contents of which are hereby incorporated by reference.

The disclosures herein relate to a technology for preventing false detection of touch sensors.

As a technology for preventing false detection of a touch sensor, it is known to provide a proximity sensor that detects proximity of an operator to a capacitive touch panel, reduce the sensitivity of the touch panel when the operator is not near, and increase the sensitivity when the operator is near, so as to prevent false detections caused by noise or the like unrelated to the operator (e.g., Patent Literature (PTL) 1).

Also, as a technology related to the present disclosure, it is known to provide a technology for lighting a plurality of LEDs which emit infrared light in a direction obliquely upward and toward a space in front of a display and detecting reflected light of infrared light by an operator by a plurality of photodiodes arranged along a position below the display, and detecting proximity of the operator to the display surface based on an intensity of the reflected light (e.g., PTL 2).

Also, as a technology related to the present disclosure, it is known to provide a touch panel in which electrodes are arranged in a straight line (one dimension) and can accept a slide operation of moving a finger touching in a direction of an arrangement of the electrodes (e.g., PTL 3).

In in-vehicle infotainment (IVI) and other in-vehicle information systems, a display unit which serves as an interface for display output and operation reception to a user is often installed on a dashboard or a top of a dashboard of an automobile.

As such a display unit, a display equipped with a touch panel and a unit equipped with capacitive touch sensors arranged along a position below the display are sometimes used.

Therefore, in order to prevent false detection due to noise of such a touch sensor, it is conceivable to prevent false detection of touch due to noise or the like by applying the above-described technology and arranging a plurality of LEDs emitting infrared light in a direction obliquely upward and toward a space in front of the display along the position below the display to detect proximity of the operator from the reflected light of the infrared light, lowering the sensitivity of the touch panel when the operator is not in proximity, and increasing the sensitivity of the touch panel when the operator is in proximity to the touch panel.

However, following problems occur when the display unit is installed on a top plate of a dashboard.

That is, when an object such as a good luck charm or an accessory suspended from a rearview mirror of the automobile hangs down to the front of the display unit, there is a possibility that proximity of the operator to this object is falsely detected and the sensitivity of the touch panel is increased, and therefore, false detection of touch due to noise or the like cannot be prevented.

If the object is a fixed and immovable object, it is possible to set a detection characteristic beforehand so as not to detect the object by calibration. However, since an object suspended from a rearview mirror is swayed by vibration of the automobile, such a detection characteristic cannot be set beforehand by calibration.

Accordingly, the present disclosure aims to appropriately prevent false detection of touch by the touch sensor even when an object is installed in a forward and upward direction.

| | |
|---|---|
| [PTL 1] | Japanese Laid-Open Patent Publication No. 2019-46342 |
| [PTL 2] | Japanese Laid-Open Patent Publication No. 2021-117189 |
| [PTL 3] | Japanese Patent No. 6488462 |

The present disclosure relates to a touch detection system according to the appended claims. Embodiments are disclosed in the dependent claims.

A touch detection system according to an aspect includes a display, touch sensors arranged below a lower edge of a display surface of the display, three or more light sources, arranged below the lower edge of the display surface of the display in a horizontal direction of the display, and configured to emit non-visible light upward in a direction toward a space in front of the display surface, photodetectors, each configured to detect a reflected light of the non-visible light emitted by a corresponding one of the light sources, a touch detector configured to detect a touch on the touch sensors with a set detection sensitivity, and a proximity detector configured to detect proximity of a hand to a region below the lower edge of the display surface, wherein the proximity detector is configured to detect the proximity of the hand to the region when a predetermined condition is satisfied for any i, i being an integer indicating a sequential position of a light source among the light sources arranged along the horizontal direction, the predetermined condition at least requires that an intensity of a reflected light from an i-th light source, among the light sources, detected by a corresponding one of the photodetectors is greater than a predetermined threshold, and is not satisfied when a reference reflected light intensity is greater than a level determined from a predetermined reference, A being an integer of one or greater, when both an (i + A)th light source and an (i - A)th light source are present among the light sources, the reference reflected light intensity is a greater one of an intensity of a reflected light from the (i + A)th light source and an intensity of a reflected light from the (i - A)th light source detected by corresponding ones of the photodetectors, or a sum of the intensity of the reflected light from the (i + A)th light source and the intensity of the reflected light from the (i - A)th light source detected by corresponding ones of the photodetectors, and when either the (i + A)th light source or the (i - A)th light source is present among the light sources, but not both, the reference reflected light intensity is an intensity of a reflected light from the present light source detected by a corresponding one of the photodetectors, and when the proximity of the hand to the region is detected, the touch detector is configured to set the detection sensitivity of the touch detector to a first sensitivity, and otherwise, the touch detector is configured to set the detection sensitivity of the touch detector to a second sensitivity, which is less sensitive than the first sensitivity.

A touch detection system according to a further aspect includes a display, touch sensors arranged below a lower edge of a display surface of the display, three or more light sources, arranged below the lower edge of the display surface of the display in a horizontal direction of the display, and configured to emit non-visible light upward in a direction toward a space in front of the display surface, photodetectors, each configured to detect a reflected light of the non-visible light emitted by a corresponding one of the light sources, a touch detector configured to detect a touch on the touch sensors with a set detection sensitivity, and a proximity detector configured to detect proximity of a hand to a region below the lower edge of the display surface, wherein the proximity detector includes a first detector, a second detector, and a detection determination unit, the first detector is configured to detect the proximity of the hand to the region when a predetermined condition is satisfied for any i, i being an integer indicating a sequential position of a light source among the light sources arranged along the horizontal direction, the predetermined condition at least requires that an intensity of a reflected light from an i-th light source, among the light sources, detected by a corresponding one of the photodetectors is greater than a predetermined threshold, and is not satisfied when a reference reflected light intensity is greater than a level determined from a predetermined reference, A being an integer of one or greater, when both an (i + A)th light source and an (i - A)th light source are present among the light sources, the reference reflected light intensity is a greater one of an intensity of a reflected light from the (i + A)th light source and an intensity of a reflected light from the (i - A)th light source detected by corresponding ones of the photodetectors, or a sum of the intensity of the reflected light from the (i + A)th light source and the intensity of the reflected light from the (i - A)th light source detected by corresponding ones of the photodetectors, and when either the (i + A)th light source or the (i - A)th light source is present among the light sources, but not both, the reference reflected light intensity is an intensity of a reflected light from the present light source detected by a corresponding one of the photodetectors, the second detector is configured to detect the proximity of the hand to the region when, for any i, an intensity of a reflected light from an i-th light source detected by a corresponding one of the photodetectors is greater than a preset second threshold that is greater than the predetermined threshold, the detection determination unit is configured to detect the proximity of the hand to the region when at least one of the first detector or the second detector detects the proximity of the hand to the region, and when the proximity of the hand to the region is detected by the detection determination unit, the touch detector is configured to set the detection sensitivity of the touch detector to a first sensitivity, and otherwise, the touch detector is configured to set the detection sensitivity of the touch detector to a second sensitivity, which is less sensitive than the first sensitivity.

A touch detection system according to a further aspect includes a display, touch sensors arranged below a lower edge of a display surface of the display, a plurality of light sources, arranged below the lower edge of the display surface of the display in a horizontal direction of the display, and configured to emit non-visible light upward in a direction toward a space in front of the display surface, photodetectors, each configured to detect a reflected light of the non-visible light emitted by a corresponding one of the light sources, a touch detector configured to detect a touch on the touch sensors with a set detection sensitivity, and a proximity detector configured to detect proximity of a hand to a region below the lower edge of the display surface, wherein the proximity detector is configured to determine detection of the proximity of the hand to the region when a predetermined condition is satisfied for any i, i being an integer indicating a sequential position of a light source among the light sources arranged along the horizontal direction, the predetermined condition is satisfied when a signal magnitude indicating an intensity of a reflected light of an i-th light source detected by a corresponding one of the photodetectors, in which frequency components in a predetermined frequency band have been attenuated, is greater than a threshold, the predetermined frequency band being determined so as to correspond to a frequency band of a swing of an object when the object is hanging in front of an upper portion of the display surface of the display, and when the proximity of the hand to the region is detected, the touch detector is configured to set the detection sensitivity of the touch detector to a first sensitivity, and otherwise, the touch detector is configured to set the detection sensitivity of the touch detector to a second sensitivity, which is less sensitive than the first sensitivity.

According to aspects of the touch detection system of the present disclosure, proximity of the operator's hand to the touch sensor can be detected by distinguishing proximity of the operator's hand to the touch sensor from the object hanging in front of the upper part of the display by taking advantage of the fact that more reflected light of continuously arranged light sources can be obtained from the object hanging in front of the lower part of the display than from the operator's hand in proximity to the touch sensor, and that the light reflected from the object has a frequency within a certain range because the suspended object swings in a pendulum shape.

As described above, according to the present disclosure, it is possible to appropriately prevent false detection of touch by the touch sensor even an object is installed in a forward and upward direction.
FIG. 1 is a block diagram illustrating a configuration of an information processing system according to an embodiment;
FIG. 2A is a front view of a display unit according to an embodiment;
FIG. 2B is a side view of the display unit according to an embodiment;
FIG. 2C is a front view illustrating the display unit with proximity sensors emitting infrared light according to an embodiment;
FIG. 2D is a side view illustrating the display unit with the proximity sensors emitting infrared light according to an embodiment;
FIG. 2E is a drawing illustrating the display unit arranged on a top plate of a dashboard according to an embodiment;
FIG. 3A is a drawing illustrating a positional relation between the display unit arranged on the top plate of the dashboard and an object hung from a rearview mirror of an automobile according to an embodiment;
FIG. 3B is a front view of the display unit with proximity sensors emitting infrared light, when the object is suspended according to an embodiment;
FIG. 3C is a side view of the display unit with the proximity sensors emitting infrared light, when the object is suspended according to an embodiment;
FIG. 3D is a front view of the display unit with the proximity sensors emitting infrared light, when an operator's finger is in proximity to the display unit according to an embodiment;
FIG. 3E is a side view of the display unit with the proximity sensors emitting infrared light, when the operator's finger is in proximity to the display unit according to an embodiment;
FIG. 4 is a drawing illustrating a configuration of a display surface proximity detection unit according to an embodiment;
FIG. 5 is a drawing illustrating a configuration of a lower region proximity detection unit according to an embodiment;
FIG. 6 is a drawing illustrating another configuration example of the lower region proximity detection unit according to an embodiment;
FIG. 7 is a drawing illustrating further another configuration example of the lower region proximity detection unit according to an embodiment;
FIG. 8A is a front view of the display unit with the proximity sensors emitting infrared light, when the operator's open hand is in proximity to the display unit according to an embodiment;
FIG. 8B is a drawing illustrating further another configuration example of the lower region proximity detection unit according to an embodiment;
FIG. 9 is a drawing illustrating further another configuration example of the lower region proximity detection unit according to an embodiment;
FIG. 10 is a drawing illustrating a mode of sensitivity adjustment in a touch detection unit according to an embodiment;
FIG. 11A is a front view of another embodiment of a display unit;
FIG. 11B is a drawing illustrating another configuration example of the information processing system according to an embodiment;
FIG. 12A is a front view of further another embodiment of a display unit; and
FIG. 12B is a front view of yet further another embodiment of a display unit.

In the following, embodiments of the present invention will be described.

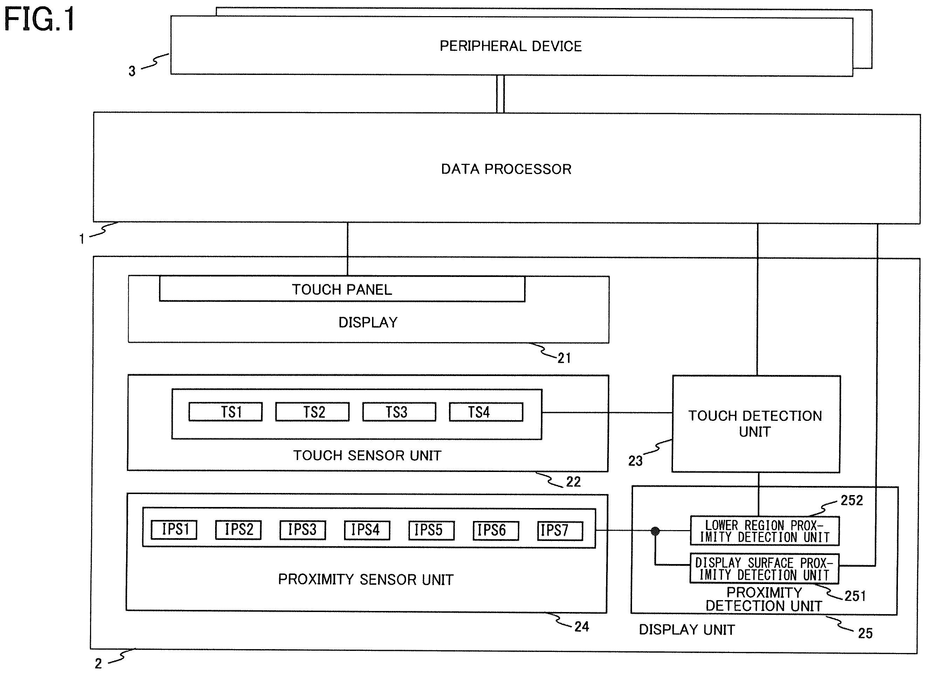

FIG. 1 is a block diagram illustrating a configuration of an information processing system according to an embodiment.

The information processing system is a system installed in an automobile, and includes a data processor 1 that executes car navigation applications, media player applications, control applications for automotive components such as air conditioners, and the like, a display unit 2 that functions as a peripheral device of the data processor 1, and other peripheral devices 3. The data processor 1 is an electronic circuit (including processor) such as a CPU, a GPU, a DSP, an FPGA, and an ASIC, which executes various processing described in the present disclosure by executing instruction codes stored in a memory or by designing a circuit for a special application.

The display unit 2 includes a display 21 with a touch panel used by the data processor 1 for video display and input of coordinates, a touch sensor unit 22, a touch detection unit 23 that detects a touch on the touch sensor, a proximity sensor unit 24, and a proximity detection unit 25.

The touch sensor unit 22 includes four touch sensors TS1 to TS4. Each touch sensor is a capacitive touch sensor, for example, a one-dimensional touch panel.

The proximity sensor unit 24 includes seven proximity sensors IPS1 to IPS7, and each proximity sensor includes an infrared LED that emits infrared light and a photodiode (PD) that detects light in a wavelength range including the wavelength of the infrared light emitted by the infrared LED.

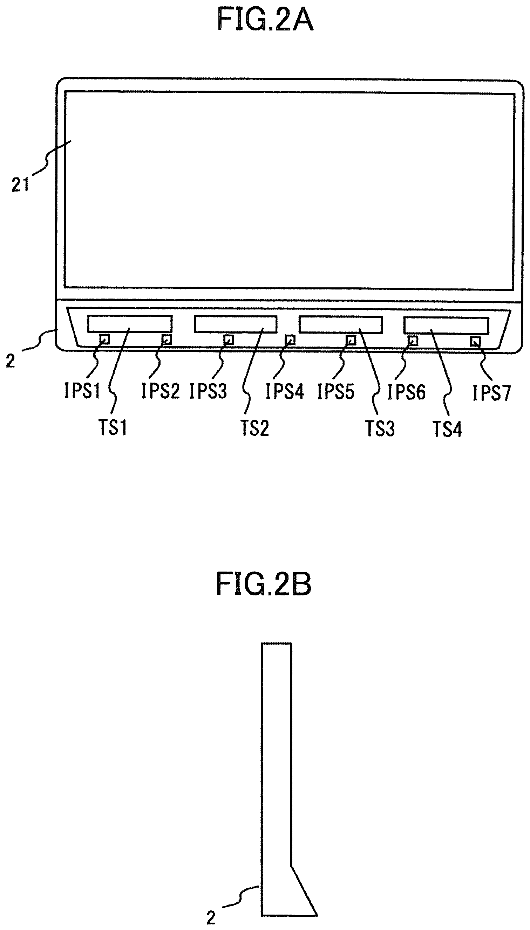

As shown in the front view of the display unit 2 in FIG. 2A and the side view of the display unit 2 in FIG. 2B, the four touch sensors TS1 to TS4 are arranged near and below the display 21 in a horizontal direction.

The seven proximity sensors IPS1 to IPS7 are arranged in an order of IPS1, IPS2, IPS3, IPS4, IPS5, IPS6, and IPS7 at intervals from left to right in a region near and below an arrangement region of the four touch sensors TS1 to TS4.

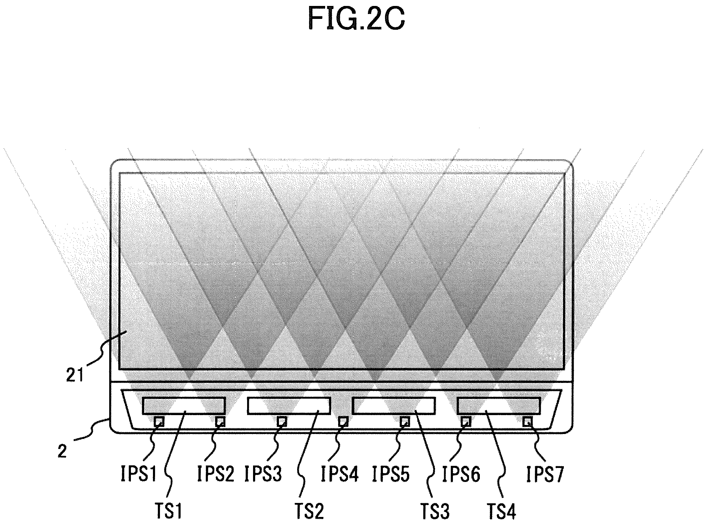

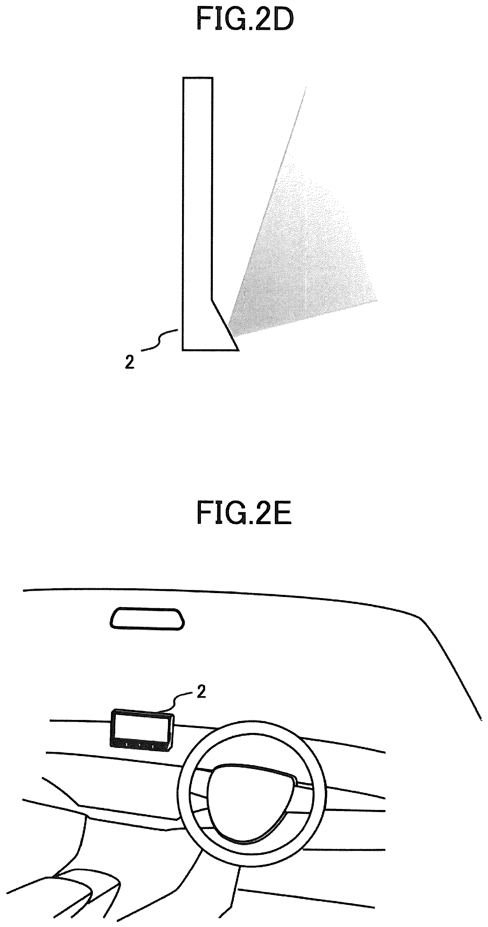

As shown in the front view of FIG. 2C and the side view of FIG. 2D, the seven proximity sensors IPS1 to IPS7 emit infrared light obliquely upward in a direction toward a space in front of the display 21 at a predetermined emission angle, and detect the intensity of reflected light of the emitted infrared light. Here, the infrared light emission and the detection of the reflected light by the seven proximity sensors IPS1 to IPS7 are sequentially and cyclically performed for each proximity sensor.

As shown in FIG. 2E, such a display unit 2 is arranged on the top plate of the dashboard. The data processor 1 and the peripheral device 3 may be integrated with the display unit 2.

Referring back to FIG. 1, the touch detection unit 23 detects the touch and the touch position on the touch sensors TS1 to TS4.

The proximity detection unit 25 includes a display surface proximity detection unit 251 that detects proximity of the operator's hand to the display surface (touch panel) of the display by using the seven proximity sensors of IPS1 to IPS7, and a lower region proximity detection unit 252 that detects proximity of the operator's hand to a lower region, or a region below the display 21, by using the seven proximity sensors of IPS1 to IPS7.

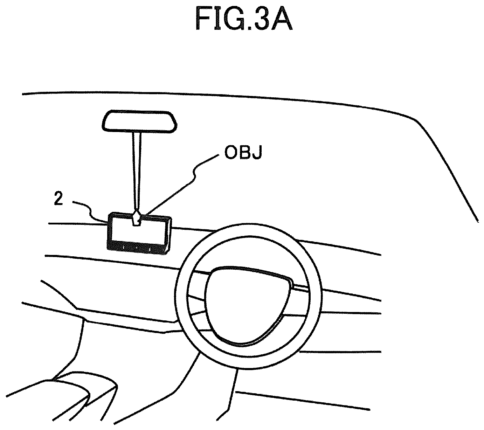

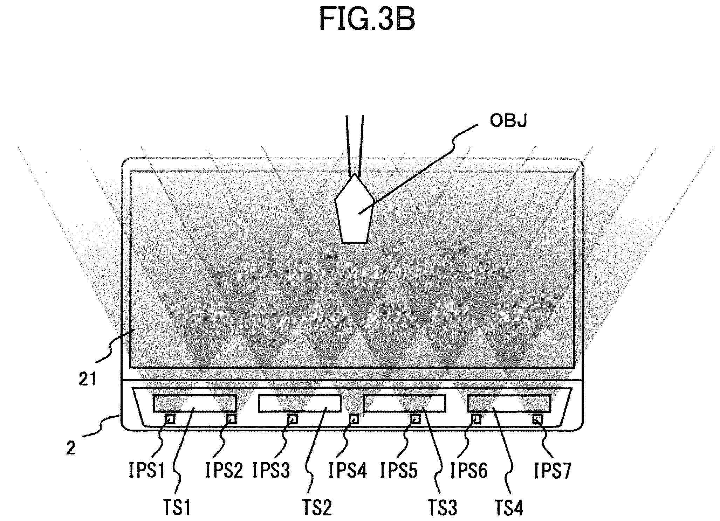

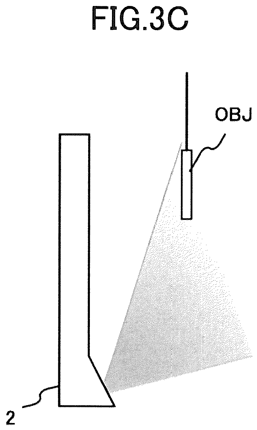

Next, FIGS. 3A, 3B, and 3C show a positional relation between the display unit 2 arranged on the top plate of the dashboard and an object such as a good luck charm or an accessory suspended from a rearview mirror of the automobile.

As shown in FIG. 3A, an object OBJ suspended from the rearview mirror of the automobile sometimes hangs to a position in front of an upper portion of the display 21 of the display unit 2. In this case, as shown in the front view of FIG. 3B and the side view of FIG. 3C, infrared light is emitted from a plurality of proximity sensors among the seven proximity sensors of IPS1 to IPS7 to the object OBJ, and reflected light of the infrared light is detected.

Here, in the present embodiment, the arrangement and emission angle of each proximity sensor are set so that the infrared light from four or more proximity sensors is emitted toward the object located at the upper front of the display 21.

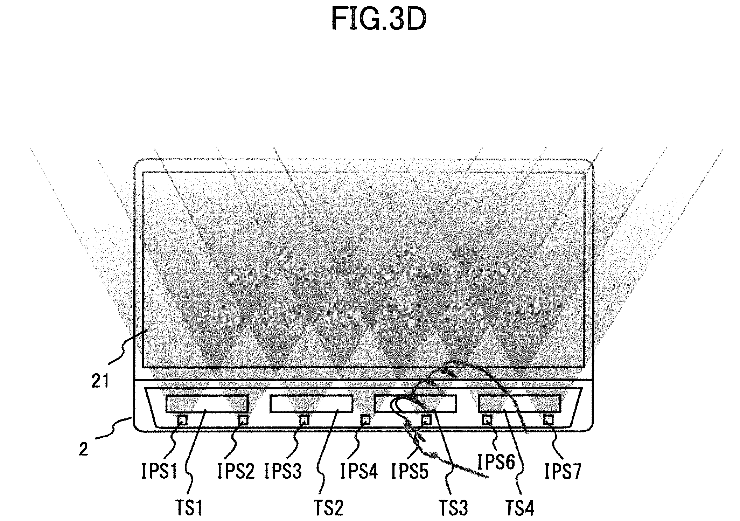

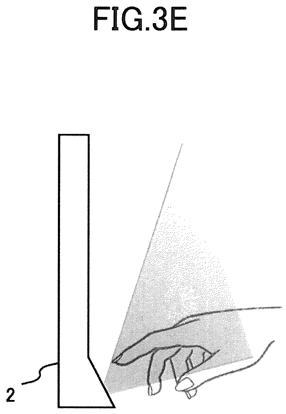

As shown in the front view of FIG. 3D and the side view of FIG. 3E, in order to operate the touch sensors TS1 to TS4, the operator extends a finger of one hand toward a position below the display 21, and this hand is in proximity to one or more proximity sensors. Therefore, the number of proximity sensors that emit infrared light toward the hand is smaller than the number of proximity sensors that emit infrared light toward the object located in front of the upper portion of the display 21, and the reflected light of the infrared light emitted toward the hand is detected.

Here, in the present embodiment, the arrangement and emission angle of each proximity sensor are set so that the infrared light of two or less proximity sensors is emitted toward the operator's hand with one finger extended to the position below the display 21.

Based on the above, the display surface proximity detection unit 251 which detects proximity of the operator's hand to the display surface (touch panel) using the seven proximity sensors of IPS1 to IPS7 and the lower region proximity detection unit 252 which detects proximity of the operator's hand to the position below the display 21 using the seven proximity sensors of IPS1 to IPS7 will be described.

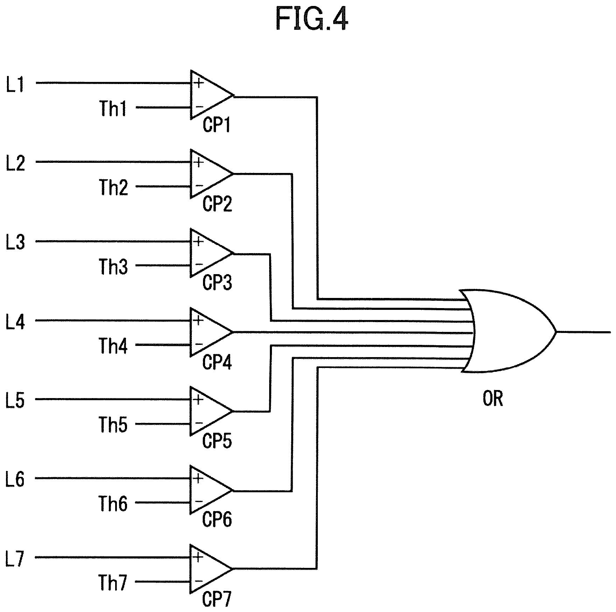

First, FIG. 4 is a drawing illustrating a configuration of a display surface proximity detection unit 251 with a logic circuit equivalent to this configuration.

As shown in the figure, the display surface proximity detection unit 251 has seven comparators of CP1 to CP7 and an OR circuit OR.

When Li (i = 1, 2, 3, 4, 5, 6, 7) is the reflected light intensity detected by IPSi, CPi compares Li with a preset threshold Thi, and outputs 1 when Li is larger, and otherwise outputs 0. Then, the OR circuit OR outputs 1 when any of CP1 to CP7 outputs 1, and outputs 0 when all of CP1 through CP7 output 0. When the output of the OR circuit OR is 1, it represents proximity of the hand to the display surface, and 0 represents non-proximity.

Therefore, when any of Li (i = 1, 2, 3, 4, 5, 6, 7) exceeds the corresponding threshold Thi, proximity of the hand to the display surface is detected.

Preferably, the threshold Thi is set to a value obtained in advance as the value of Li when the hand is in proximity to the position in front of the display surface to which the infrared light of IPSi is emitted by a predetermined degree or more. However, all of the thresholds Thi may be set to the same value.

The threshold Thi is set so as to be larger than the intensity of the reflected light from the object OB so as not to detect the object OB in front of the upper part of the display 21 as proximity of the hand as shown in FIG. 3B. Since the reflected light intensity increases as the size of a reflector increases as the reflector is in greater proximity to the proximity sensor, proximity of the hand to the front of the display surface can be detected without hindrance in practical use by setting the threshold Thi in this manner.

Proximity of the hand to the display surface detected by the display surface proximity detection unit 251 is notified to the data processor 1, and the data processor 1 notified of proximity of the hand to the display surface performs predetermined processing such as switching the display screen of the display 21 and enlarging the display icon.

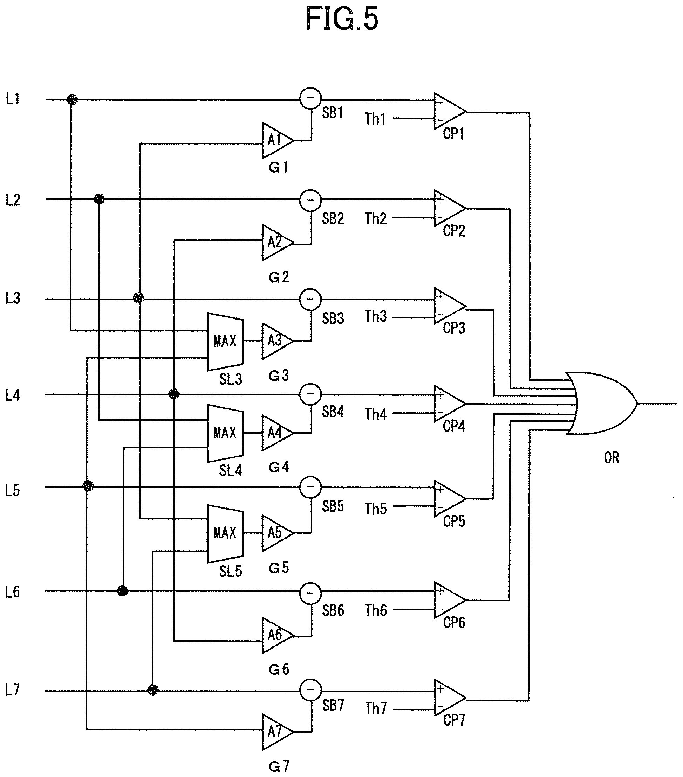

Next, FIG. 5 is a drawing illustrating a configuration of a lower region proximity detection unit 252 with a logic circuit equivalent to this configuration.

As shown in the figure, the lower region proximity detection unit 252 has seven comparators of CP1 to CP7, seven subtractors of SB1 to SB7, seven multipliers of G1 to G7, three selectors of SL3 to SL5, and the OR circuit OR.

SLj (j = 3, 4, 5) outputs the larger value of Lj - 2 and Lj + 2. Gj amplifies the output of SLj with gain Aj. SBj subtracts the output of Gj from Lj. CPj compares the output of SBj with a preset threshold Thj, outputs 1 when the output of SBj is larger, and otherwise outputs 0.

Gk (k = 1, 2) amplifies the output of Lk + 2 with gain Ak. SBk subtracts the output of Gk from Lk. CPk compares the output of SBk with a preset threshold Thk, outputs 1 when the output of SBk is larger, and otherwise outputs 0.

Gm (m = 6, 7) amplifies the output of Lm - 2 with gain Am. SBm subtracts the output of Gm from Lm. CPm compares the output of SBm with a preset threshold Thm, outputs 1 when the output of SBm is larger, and otherwise outputs 0.

The OR circuit OR outputs 1 when any of CP1 to CP7 outputs 1, and outputs 0 when all of CP1 through CP7 output 0. When the output of the OR circuit OR is 1, it indicates proximity of the hand to the lower region, which is a region surrounding the touch sensor below the display 21, and when it is 0, it indicates non-proximity.

Therefore, the lower region proximity detection unit 252 detects proximity of the hand to the lower region when a value resulting from subtracting a value obtained by multiplying a predetermined coefficient Ai by the larger one of Li + 2 and Li - 2 (when Li + 2 is not available, by multiplying the predetermined coefficient Ai by Li - 2, and when Li - 2 is not available, by multiplying the predetermined coefficient Ai by Li + 2) from Li (i = 1, 2, 3, 4, 5, 6, 7) is greater than a corresponding threshold Thi.

As a result, proximity of the hand to the lower region is detected only when the reflected light intensity equal to or greater than Thi is detected in any of the touch sensors IPSi in conjunction with the reflected light intensity equal to or greater than a predetermined level being not detected in both of the second-nearest touch sensors (IPSi - 2 and IPSi + 2, if only one of them is present, the present one).

Therefore, as shown in FIG. 3B, the detection of the hand toward the lower region is not detected for the object OBJ located at the upper front of the display 21 and to which infrared light from four or more proximity sensors is emitted. Conversely, as shown in FIG. 3D, the detection of the hand toward the lower region is detected for the operator's hand in proximity to the touch sensors below the display 21 and to which infrared light from two or less proximity sensors is emitted.

It should be noted that gain Ai of Gi is a tuning factor, and an appropriate value is determined in advance by experiments or the like so that a hand toward the lower region is not detected for the object OBJ in FIG. 3B and the hand toward the lower region is detected for the operator's hand in proximity to the touch sensor below the display 21.

Such a function of the lower region proximity detection unit 252 may be achieved by a configuration different from that shown in FIG. 5.

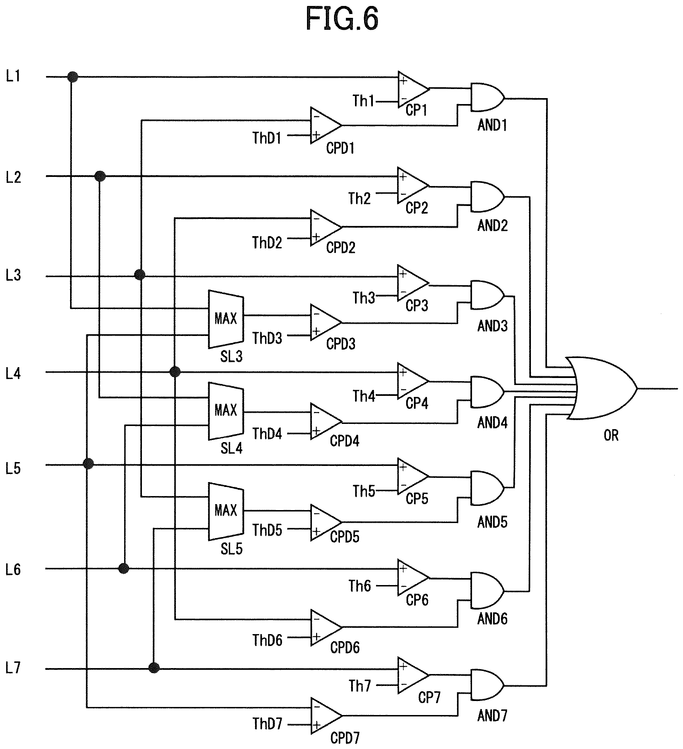

For example, the configuration of the logic circuit equivalent to the lower region proximity detection unit 252 may be the configuration shown in FIG. 6.

As shown, in this configuration, the lower region proximity detection unit 252 has seven comparators CP1 to CP7, seven comparators CPD1 to CPD7, seven AND circuits AND1 to AND7, three selectors SL3 to SL5, and the OR circuit OR.

CPi (i = 1, 2, 3, 4, 5, 6, 7) compares Li with a preset threshold Thi, outputs 1 when Li is larger, and otherwise outputs 0.

SLj (j = 3, 4, 5) outputs the larger value of Lj - 2 and Lj + 2. CPDj compares the output of SLj with the preset threshold ThDj, outputs 1 when the output of ThDj is larger, and otherwise outputs 0.

CPDk (k = 1, 2) compares the output of Lk + 2 with the threshold ThDi, outputs 1 when ThDk is larger, and otherwise outputs 0.

CPDm (m = 6, 7) compares the output of Lm - 2 with the threshold ThDm, outputs 1 when the output of ThDm is larger, and otherwise outputs 0.

ANDi (i = 1, 2, 3, 4, 5, 6, 7) outputs 1 when both outputs of CPi and CPDi are 1, and otherwise outputs 0.

The OR circuit OR outputs 1 when any of AND1 to AND7 outputs 1, and outputs 0 when all of AND1 through AND7 output 0.

When the output of the OR circuit OR is 1, it indicates proximity of the hand to the lower region, and when it is 0, it indicates non-proximity.

As a result, when the output of CPDi to the OR circuit OR is 0, since the output of CPi is masked to 0, proximity of the hand to the lower region is detected only when the reflected light intensity equal to or greater than Thi is detected in any of the touch sensors IPSi in conjunction with the reflected light intensity equal to or greater than a predetermined level being not detected in both of the second-nearest touch sensors (IPSi - 2 and IPSi + 2, if only one of them is present, the present one).

Therefore, the configuration shown in FIG. 6 can perform the same function as the lower region proximity detection unit 252 shown in FIG. 5.

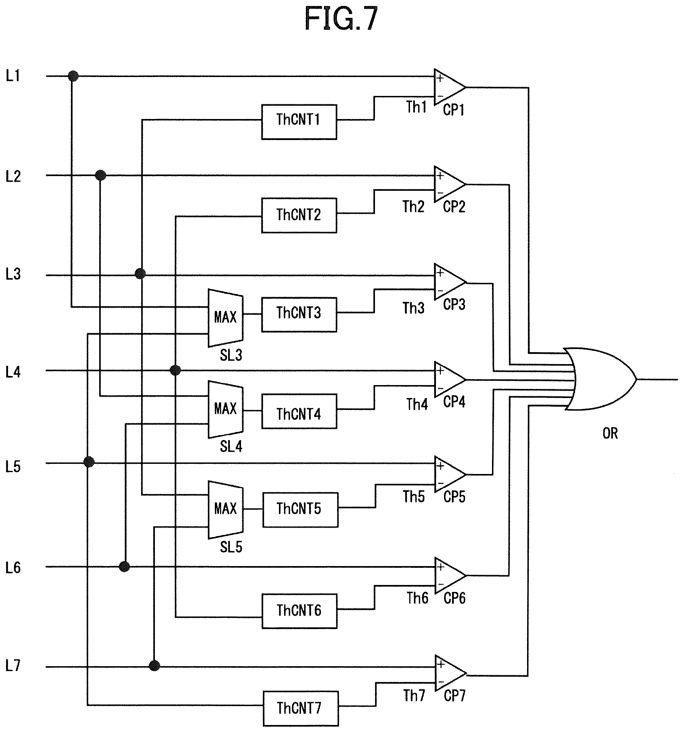

Note that the threshold ThDi is set in advance by finding an appropriate value by experiments or the like, in which proximity of a hand to the lower region is not detected with respect to the object OBJ shown in FIG. 3B and proximity of the hand to the lower region is detected with respect to the operator's hand in proximity to the touch sensor on the region below the display 21. Alternatively, for example, the configuration of the logic circuit equivalent to the lower region proximity detection unit 252 may be the configuration shown in FIG. 7.

As shown, in this configuration, the lower region proximity detection unit 252 has seven comparators of CP1 to CP7, three selectors of SL3 to SL5, seven threshold control circuits of ThCNT1 to ThCNT7, and the OR circuit OR.

CPi (i = 1, 2, 3, 4, 5, 6, 7) compares Li with the threshold Thi input from ThCNTi, outputs 1 when Li is larger, and otherwise outputs 0.

SLj (j = 3, 4, 5) outputs the larger value of Lj - 2 and Lj + 2, and ThCNTj controls ThCNTj output to CPj so that the ThCNTj output increases as the output of SLj increases.

ThCNTk (k = 1, 2) controls ThCNTk output to CPk according to the output of Lk + 2, so that ThCNTk increases as Lk + 2 increases.

ThCNTm (m = 6, 7) controls ThCNTm output to CPm according to the output of Lm -2, so that the ThCNTm output increases as Lm - 2 increases.

The OR circuit OR outputs 1 when any of CP1 to CP7 outputs 1, and outputs 0 when all of CP1 through CP7 output 0.

When the output of the OR circuit OR is 1, it indicates proximity of the hand to the lower region, and when it is 0, it indicates non-proximity.

As a result, the threshold Thi, which is compared with Li in CPi, increases when reflected light intensity of a predetermined level or more is detected in both of the second-nearest touch sensors (IPSi - 2 and IPSi + 2, if only one of them is present, the present one), and the sensitivity of detecting proximity to the lower region in CPi decreases. Therefore, the configuration shown in FIG. 7 can perform the same function as the lower region proximity detection unit 252 shown in FIG. 5.

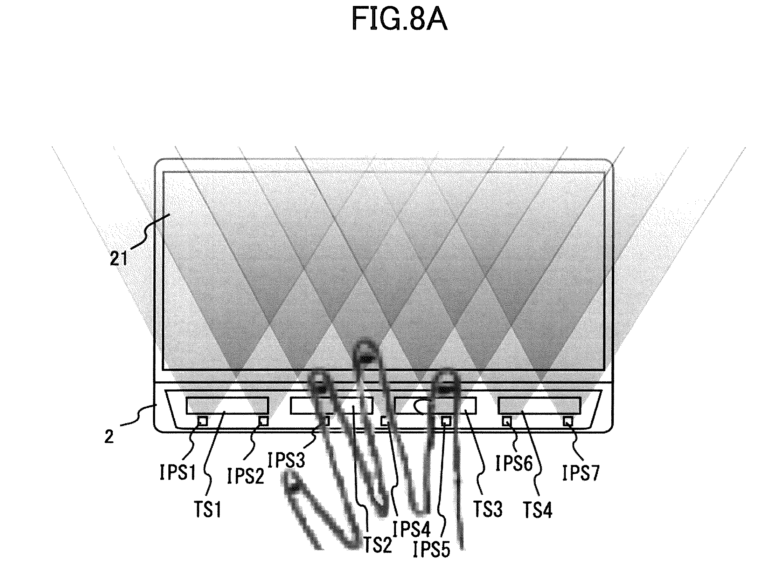

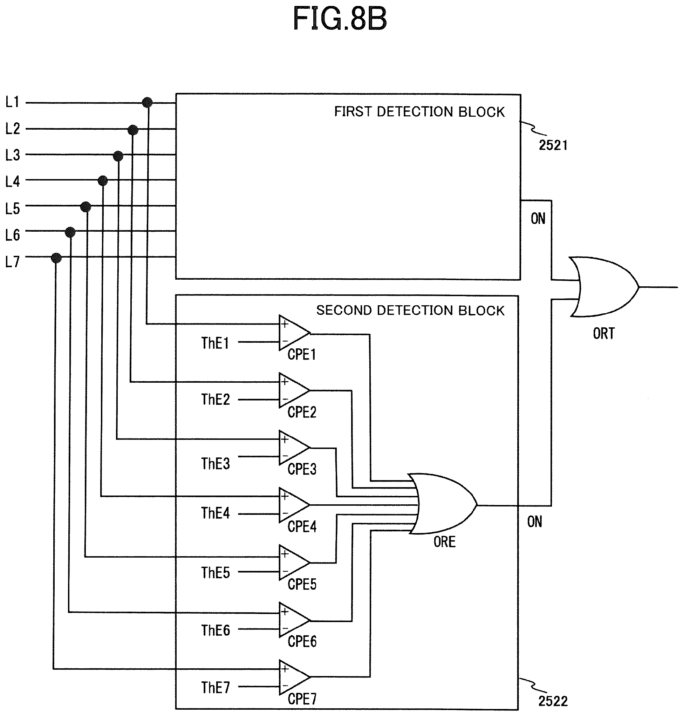

Alternatively, as shown in FIG. 8A, when the operator tries to operate the touch sensor by opening the hand, the reflected light intensity may be detected in three or more touch sensors. In this case, the configuration shown in FIGS. 5, 6, and 7 may not detect proximity of the hand to the lower region. Therefore, the configuration of the lower region proximity detection unit 252 may be the configuration shown in FIG. 8B.

As shown in the figure, in this configuration, the lower region proximity detection unit 252 includes a first detection block 2521, a second detection block 2522, and an OR circuit ORT.

The first detection block 2521 has the same configuration as the lower region proximity detection unit 252 shown in FIGS. 5, 6, or 7.

The second detection block 2522 has seven comparators of CPE1 to CPE7 and an OR circuit ORE.

CPEi compares Li with a preset threshold ThEi, and outputs 1 when Li is larger, and otherwise outputs 0. The OR circuit ORE outputs 1 when any one of CPE1 to CPE7 outputs 1, and outputs 0 when all of CPE1 through CPE7 outputs 0.

The OR circuit ORT outputs 1 when one or both of the first detection block 2521 and the second detection block 2522 outputs 1, and outputs 0 when both of them output 0. When the output of the OR circuit ORT is 1, it indicates proximity of the hand to the lower region, and 0 indicates non-proximity.

As the threshold ThEi used in the second detection block 2522, a value larger than the threshold Thi used in the first detection block 2521 is used.

As shown in FIG. 8A, when the operator operates the touch sensor with the hand spread out, the reflected light intensity increases because the hand is in proximity to the proximity sensor and the hand is spread out. Therefore, as the threshold ThEi, a proper value in which the reflected light intensity of the object OBJ shown in FIG. 3B does not exceed the threshold ThEi and the reflected light intensity of the hand that is spread out and in proximity to the touch sensor below the display 21 exceeds the threshold ThEi is determined in advance by experiments or the like, so that the hand that is spread out and intends to operate the touch sensor can be discriminated and detected.

As a result, even if the proximity of the hand to the lower region cannot be detected in the first detection block 2521, the output of the OR circuit ORT indicates the proximity of the hand to the lower region when the hand that is open and intends to operate the touch sensor is detected in the second detection block 2522.

Here, until now, whether Li (i = 1, 2, 3, 4, 5, 6, 7) indicates the proximity of the hand to the lower region has been determined by considering Li, Li + 2, and Li - 2. However, whether Li (i = 1, 2, 3, 4, 5, 6, 7) indicates the proximity of the hand to the lower region may be determined by considering A as an integer of one or more other than two and Li, Li + A, and L - A in the same manner as in the case of Li + 2 and Li - 2, depending on the arrangement of the proximity sensors IPS1 to IPS7.

Moreover, the configuration of the lower region proximity detection unit 252 shown in FIGS. 5, 6, and 7 and the configuration of the first detection block 2521 shown in FIG. 8 may be such that SLj (j = 3, 4, 5) which outputs the larger value of Lj - 2 and Lj + 2 in the configuration is replaced by a computing element CALj which outputs ki [(Lj - 2) + (Lj + 2)]. Where, ki is a tuning coefficient, and it is set in advance by finding an appropriate value by experiments and the like, in which proximity of the hand to the lower region is not detected for the object OBJ shown in FIG. 3B, and proximity of the hand to the lower region is detected for the operator's hand which is in proximity to the touch sensor below the display 21.

In this manner, the function similar to that of the lower region proximity detection unit 252 shown in FIGS. 5, 6, and 7 and the first detection block 2521 shown in FIG. 8 can be achieved.

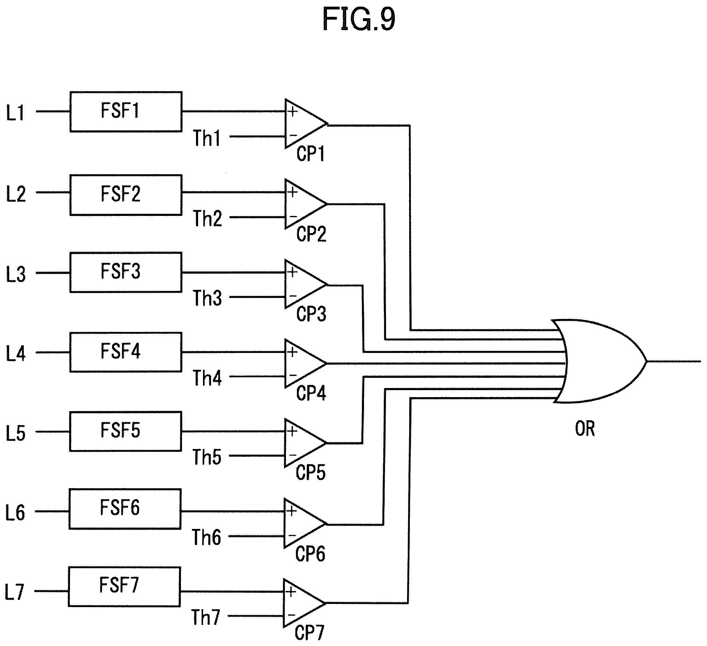

Next, the configuration of the lower region proximity detection unit 252 may be equivalent to that of the logic circuit shown in FIG. 9.

As shown in the figure, in this configuration, the lower region proximity detection unit 252 has seven comparators of CP1 to CP7, seven frequency selection filters of FSF1 to FSF7, and the OR circuit OR.

CPi (i = 1, 2, 3, 4, 5, 6, 7) compares Li passed through the frequency selection filter FSFi with a preset threshold Thi, and outputs 1 when Li is larger, and outputs 0 when Li is not.

The OR circuit OR outputs 1 when any of CP1 to CP7 outputs 1, and outputs 0 when all of CP1 through CP7 outputs 0.

When the output of the OR circuit OR is 1, it indicates proximity of the hand to the lower region, and when it is 0, it indicates non-proximity.

Here, the object OBJ suspended from the rearview mirror of the automobile swings. A period in which the object OBJ swings is a fixed period corresponding to the length of the object OBJ as a pendulum, and this length is within a fixed range when it is located at the upper front of the display 21. Therefore, the period of oscillation of the object OBJ and the period of reflected light of the object OBJ detected by IPS1 to IPS7 are within a certain range. Therefore, the reflected light of the object OBJ detected by IPS1 to IPS7 has a frequency within a certain range. The certain range of the frequency is different from the frequency band of the reflected light of the operator's hand.

Therefore, by setting in advance the frequency gain characteristic that cuts off components in a certain frequency band as the frequency gain characteristic of the frequency selection filters FSF1 to FSF7, it is possible to detect the proximity to the lower region for the operator's hand without detecting the proximity to the lower region for the object OBJ.

Note that the frequency band of the reflected light of the object OBJ is higher than the frequency band of the reflected light obtained for a normal operation of operating the touch sensor of the operator's hand. Therefore, LPF (Low Pass Filter) may be used as the frequency selection filters FSF1 to FSF7.

Referring back to FIG. 1, the touch detection unit 23 for detecting the touch on the touch sensors TS1 to TS4 performs control to increase the sensitivity of the touch detection when the lower region proximity detection unit 252 detects the proximity of the operator's hand to the lower region and to decrease the sensitivity of the touch detection when the operator's hand is not in proximity to the lower region.

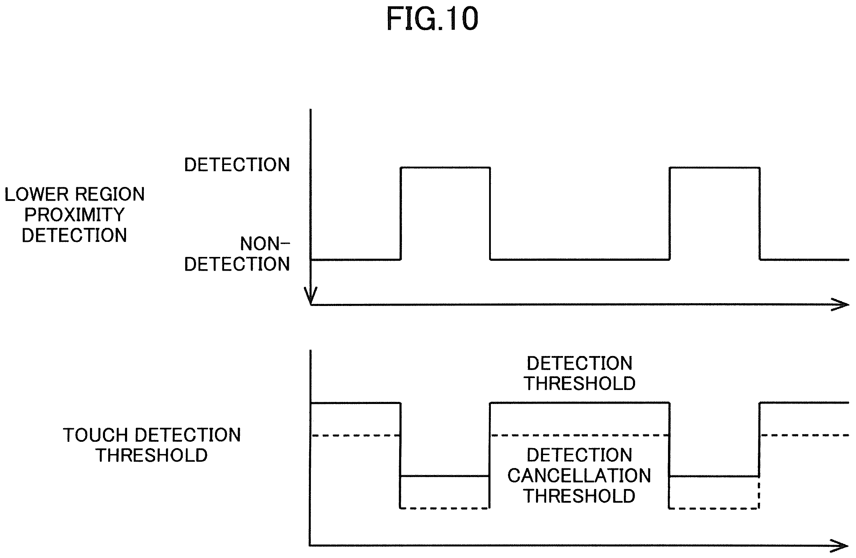

As shown in FIG. 10, for example, the control of the sensitivity is performed by reducing the touch detection thresholds consisting of the detection threshold, which is the threshold of capacitance of the touch sensors TS1 to TS4 for detecting the touch in a state where the touch is not detected, and the detection cancellation threshold, which is the threshold of capacitance of the touch sensors TS1 to TS4 for detecting the touch in a state where the touch is detected, to respective smaller values when the lower region proximity detection unit 252 detects the proximity of the operator's hand to the lower region than when proximity of the operator's hand to the lower region is not detected.

The presence or absence of touch and the touch position of the touch sensors TS1 to TS4 detected by the touch detection unit 23 are notified to the data processor 1. The data processor 1, which is notified of the touch on the touch sensors TS1 to TS4, performs predetermined processing according to the touched touch sensor, the touch position, and the change of the touch position. For example, when the notified content indicates the slide operation of the touch sensor for volume adjustment, the data processor 1 performs processing to adjust the output level of the output sound according to the slide direction.

Thus, the embodiment of the present invention has been described.

In the above embodiment, a proximity sensor unit 24 including seven proximity sensors IPS1 to IPS7 provided with infrared LEDs and photodiodes (PDs) were used, but the same number or a different number of infrared LEDs and photodiodes (PDs) may be used as the proximity sensor unit 24.

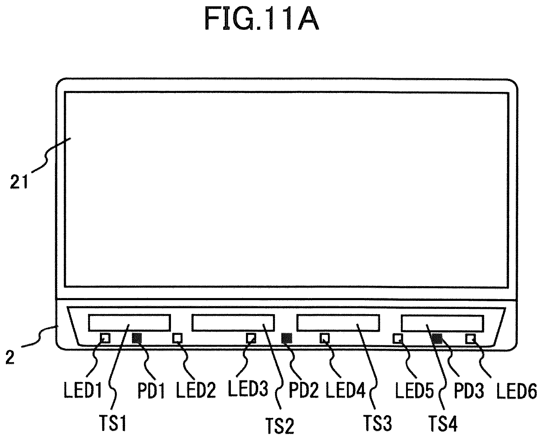

For example, as shown in FIG. 11A, six infrared LEDs in the order of LED1, LED2, LED3, LED4, LED5, and LED6 are arranged in a region near and below the arrangement region of the touch sensors (TS1 to TS4) in a horizontal direction, PD1 is arranged between LED1 and LED2, PD2 is arranged between LED3 and LED4, and PD3 is arranged between LED5 and LED6.

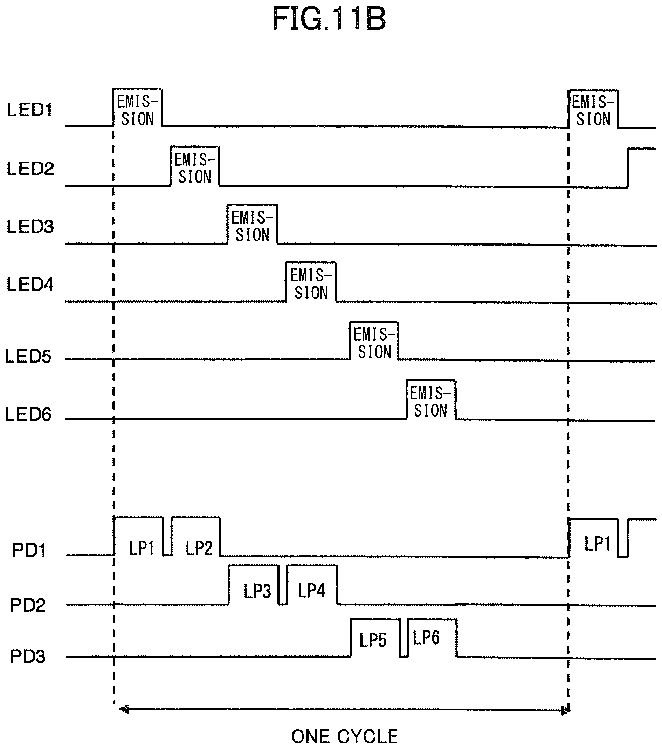

Then, as shown in FIG. 11B, the infrared LEDs are sequentially emitted in the order of LED1, LED2, LED3, LED4, LED5, and LED6, and the reflected light intensity detected by PD1 during the emission of LED1 is LP1, the reflected light intensity detected by PD1 during the emission of LED2 is LP2, the reflected light intensity detected by PD2 during the emission of LED3 is LP3, the reflected light intensity detected by PD2 during the emission of LED4 is LP4, the reflected light intensity detected by PD3 during the emission of LED5 is LP5, and the reflected light intensity detected by PD3 during the emission of LED6 is LP6. Then, by using LPi (i = 1, 2, 3, 4, 5, 6) instead of the reflected light intensity Li detected by the IPSi in the above embodiment, the proximity sensor unit 24 functions in the same manner as when the proximity sensors are six in the above embodiment.

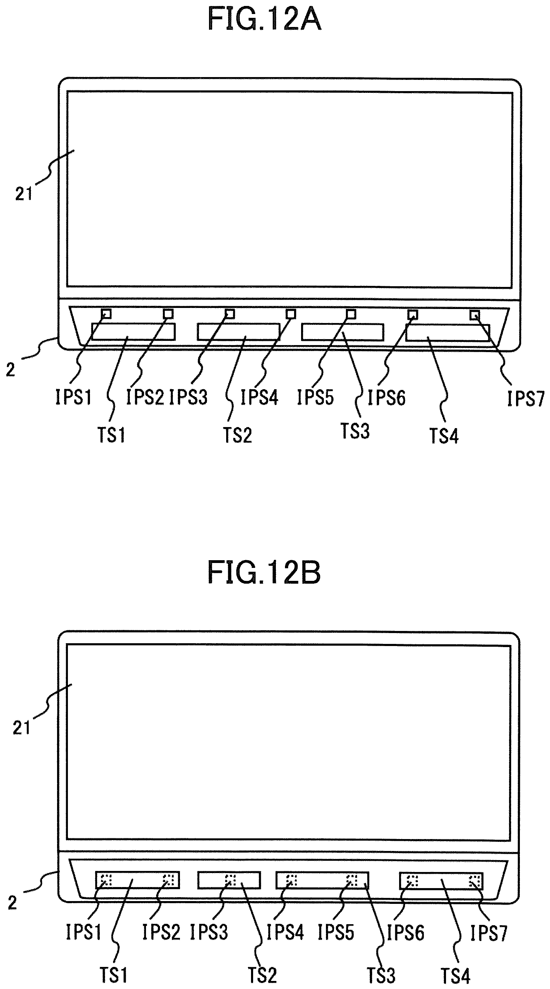

In the above embodiments, the proximity sensors (IPS1-IPS7), the infrared LEDs (LED1-LED6) and the photodiodes (PD1-PD3) are arranged in a region near and below the arrangement region of the touch sensors (TS1-TS4), but the proximity sensors (IPS1-IPS7), the infrared LEDs (LED1-LED6) and the photodiodes (PD1-PD3) may be arranged in a region above the arrangement region of the touch sensors (TS1-TS4), located between the display 21 and the touch sensors (TS1-TS4), as shown in FIG. 12A for the proximity sensors (IPS1-IPS7).

Alternatively, the touch sensors (TS1-TS4) may be formed of a material that transmits infrared light such as a transparent electrode, and as shown for the proximity sensors (IPS1-IPS7) in FIG. 12B, the proximity sensors (IPS1-IPS7), infrared LEDs (LED1-LED6), and photodiodes (PD1-PD3) may be disposed behind the touch sensors (TS1-TS4).

In the above-described embodiment, the number of the proximity sensors (IPS) and infrared LEDs (LED) may be any number of four or more, except when the lower region proximity detection unit 252 is configured as in FIG. 9. In addition, except in the case of FIG. 9, when determining whether Li indicates proximity of the hand to the lower region, Li, Li + 1 and Li - 1 may be considered instead of Li, Li + 2 and Li - 2 as described above, and the number of the proximity sensors (IPS) and infrared LEDs (LED) may be any number of three or more.

In addition, when the lower region proximity detection unit 252 is configured as in FIG. 9, the number of the proximity sensors (IPS) and infrared LEDs (LED) may be any number.

## Claims

1. A touch detection system comprising:
a display;
touch sensors arranged below a lower edge of a display surface of the display;
three or more light sources, arranged below the lower edge of the display surface of the display in a horizontal direction of the display, and configured to emit non-visible light upward in a direction toward a space in front of the display surface;
photodetectors, each configured to detect a reflected light of the non-visible light emitted by a corresponding one of the light sources;
a touch detector configured to detect a touch on the touch sensors with a set detection sensitivity; and
a proximity detector configured to detect proximity of a hand to a region below the lower edge of the display surface,
wherein:
the proximity detector is configured to detect the proximity of the hand to the region when a predetermined condition is satisfied for any i, i being an integer indicating a sequential position of a light source among the light sources arranged along the horizontal direction;
the predetermined condition at least requires that an intensity of a reflected light from an i-th light source, among the light sources, detected by a corresponding one of the photodetectors is greater than a predetermined threshold, and is not satisfied when a reference reflected light intensity is greater than a level determined from a predetermined reference;
A being an integer of one or greater, when both an (i + A)th light source and an (i - A)th light source are present among the light sources, the reference reflected light intensity is a greater one of an intensity of a reflected light from the (i + A)th light source and an intensity of a reflected light from the (i - A)th light source detected by corresponding ones of the photodetectors, or a sum of the intensity of the reflected light from the (i + A)th light source and the intensity of the reflected light from the (i - A)th light source detected by corresponding ones of the photodetectors, and when either the (i + A)th light source or the (i - A)th light source is present among the light sources, but not both, the reference reflected light intensity is an intensity of a reflected light from the present light source detected by a corresponding one of the photodetectors; and
when the proximity of the hand to the region is detected, the touch detector is configured to set the detection sensitivity of the touch detector to a first sensitivity, and otherwise, the touch detector is configured to set the detection sensitivity of the touch detector to a second sensitivity, which is less sensitive than the first sensitivity.

2. The touch detection system according to claim 1, wherein:
the proximity detector is configured to detect the proximity of the hand to the region when, for any i, a value obtained by subtracting the reference reflected light intensity from an intensity of a reflected light of an i-th light source detected by a corresponding one of the photodetectors is greater than a predetermined threshold; and
when the proximity of the hand to the region is detected, the touch detector is configured to set the detection sensitivity of the touch detector to the first sensitivity, and otherwise, the touch detector is configured to set the detection sensitivity of the touch detector to the second sensitivity.

3. The touch detection system according to claim 1 or 2, wherein:
the proximity detector is configured to detect the proximity of the hand to the region when, for any i, an intensity of a reflected light from an i-th light source detected by a corresponding one of the photodetectors is greater than a predetermined threshold in conjunction with the reference reflected light intensity being not greater than a predetermined value; and
when the proximity of the hand to the region is detected, the touch detector is configured to set the detection sensitivity of the touch detector to the first sensitivity, and otherwise, the touch detector is configured to set the detection sensitivity of the touch detector to the second sensitivity.

4. The touch detection system according to one of claims 1 to 3, wherein:
the proximity detector is configured to detect the proximity of the hand to the region when, for any i, an intensity of a reflected light from an i-th light source detected by a corresponding one of the photodetectors is greater than a threshold that is set to increase as the reference reflected light intensity increases; and
when the proximity of the hand to the region is detected, the touch detector is configured to set the detection sensitivity of the touch detector to the first sensitivity, and otherwise, the touch detector is configured to set the detection sensitivity of the touch detector to the second sensitivity.

5. The touch detection system according to one of claims 1 to 4, wherein A = 2.

6. A touch detection system comprising:
a display;
touch sensors arranged below a lower edge of a display surface of the display;
three or more light sources, arranged below the lower edge of the display surface of the display in a horizontal direction of the display, and configured to emit non-visible light upward in a direction toward a space in front of the display surface;
photodetectors, each configured to detect a reflected light of the non-visible light emitted by a corresponding one of the light sources;
a touch detector configured to detect a touch on the touch sensors with a set detection sensitivity; and
a proximity detector configured to detect proximity of a hand to a region below the lower edge of the display surface,
wherein:
the proximity detector includes a first detector, a second detector, and a detection determination unit;
the first detector is configured to detect the proximity of the hand to the region when a predetermined condition is satisfied for any i, i being an integer indicating a sequential position of a light source among the light sources arranged along the horizontal direction;
the predetermined condition at least requires that an intensity of a reflected light from an i-th light source, among the light sources, detected by a corresponding one of the photodetectors is greater than a predetermined threshold, and is not satisfied when a reference reflected light intensity is greater than a level determined from a predetermined reference;
A being an integer of one or greater, when both an (i + A)th light source and an (i - A)th light source are present among the light sources, the reference reflected light intensity is a greater one of an intensity of a reflected light from the (i + A)th light source and an intensity of a reflected light from the (i - A)th light source detected by corresponding ones of the photodetectors, or a sum of the intensity of the reflected light from the (i + A)th light source and the intensity of the reflected light from the (i - A)th light source detected by corresponding ones of the photodetectors, and when either the (i + A)th light source or the (i - A)th light source is present among the light sources, but not both, the reference reflected light intensity is an intensity of a reflected light from the present light source detected by a corresponding one of the photodetectors;
the second detector is configured to detect the proximity of the hand to the region when, for any i, an intensity of a reflected light from an i-th light source detected by a corresponding one of the photodetectors is greater than a preset second threshold that is greater than the predetermined threshold;
the detection determination unit is configured to detect the proximity of the hand to the region when at least one of the first detector or the second detector detects the proximity of the hand to the region; and
when the proximity of the hand to the region is detected by the detection determination unit, the touch detector is configured to set the detection sensitivity of the touch detector to a first sensitivity, and otherwise, the touch detector is configured to set the detection sensitivity of the touch detector to a second sensitivity, which is less sensitive than the first sensitivity.

7. A touch detection system comprising:
a display;
touch sensors arranged below a lower edge of a display surface of the display;
a plurality of light sources, arranged below the lower edge of the display surface of the display in a horizontal direction of the display, and configured to emit non-visible light upward in a direction toward a space in front of the display surface;
photodetectors, each configured to detect a reflected light of the non-visible light emitted by a corresponding one of the light sources;
a touch detector configured to detect a touch on the touch sensors with a set detection sensitivity; and
a proximity detector configured to detect proximity of a hand to a region below the lower edge of the display surface, wherein:
the proximity detector is configured to determine detection of the proximity of the hand to the region when a predetermined condition is satisfied for any i, i being an integer indicating a sequential position of a light source among the light sources arranged along the horizontal direction;
the predetermined condition is satisfied when a signal magnitude indicating an intensity of a reflected light of an i-th light source detected by a corresponding one of the photodetectors, in which frequency components in a predetermined frequency band have been attenuated, is greater than a threshold, the predetermined frequency band being determined so as to correspond to a frequency band of a swing of an object when the object is hanging in front of an upper portion of the display surface of the display; and
when the proximity of the hand to the region is detected, the touch detector is configured to set the detection sensitivity of the touch detector to a first sensitivity, and otherwise, the touch detector is configured to set the detection sensitivity of the touch detector to a second sensitivity, which is less sensitive than the first sensitivity.

8. The touch detection system according to one of claims 1 to 7, wherein the display is arranged on a top of a dashboard of an automobile.
